# EUROPÄISCHE PATENTANMELDUNG

(11) **EP 1 847 487 A2**
(43) Veröffentlichungstag der Anmeldung: **24.10.2007**
(21) Anmeldenummer: 07005662.7
(22) Anmeldetag: 20.03.2007
(51) Int. Cl.: B65G 47/14

(54) **Aufgabestation für Rundholz mit Vereinzelung der Baumstämme**

(30) Priorität: 21.03.2006 EP 06005769
(71) Anmelder: Wiedemann, Josef, 95369 Untersteinach (DE)
(72) Erfinder: Wiedemann, Josef, 95369 Untersteinach (DE)

(57) **Zusammenfassung**

Eine erfindungsgemäße Aufgabestation für Rundholz setzt sich aus einzelnen fertig montierten statisch in sich tragenden Fördereinheiten zusammen, bestehend aus dem Vorratsförderer (C) und der Vereinzelüngsstufe (B), die beide auf einem Tragegestell (A) aufgesetzt sind, zwei Kettensträngen (F), je einer Antriebs- und Abtriebseinheit (G) und den Antriebswellen.

Über die Passungen (E) werden der Vorratsförderer (C), die Vereinzelungsstufe (B) und das Tragegestell (A) mittels einer Konusbefestigung (L) mit daraufgesetzter Verschraubung aufeinandergesetzt.

Diese einzelnen Fördereinheiten können durch ihre Bauart zu Aufgabestationen von beliebiger Länge und wahlweise zu Rechts- oder Linksaufgaben aneinandergefügt werden.

Als Ersatz für den letzten Kettenstrang verläuft parallel zu den Kettonsträngen (F) ein Abladeholm (D₁) zum Auflegen der Baumstämme beim Beschicken des Vorratsförderers (C).

## Beschreibung

Aufgabestationen kommen in holzbe- und verarbeitenden Betrieben überall dort zum Einsatz, wo Rundholzladungen zu einem Längsförderer weitertransportiert und vereinzelt werden müssen.

Gegenstand der vorliegenden Erfindung ist eine solche Aufgabestation in verbesserter Form. Marktüblich werden sie mit vielen Tragefüßen und ohne die Möglichkeit des problemlosen Aneinanderreihens der einzelnen Fördereinheiten gebaut. Aufwendige Betonierungsarbeiten sind bei der Montage notwendig, sowie ein hoher Aufwand bei einer Demontage und einem eventuellen Wiederaufbau. Sie erfüllen denselben Zweck, unterscheiden sich aber grundsätzlich in der Bauart.

Eine erfindungsgemäße Aufgabestation mit Vereinzelungsstufe kann mit geringstem Zeit- und Kostenaufwand montiert oder demontiert werden, und ist sowohl im Langholz- als auch im Kurzholzbereich gleichermaßen einsetzbar, also für alle in holzbe- und verarbeitenden Betrieben verarbeiteten Nutzhölzer. Dabei spielt es keine Rolle, ob die Aufgabestation links oder rechts an den Längsförderer angeflanscht wird. Sie hat durch ihre Bauart soviel Bodenfreiheit, daß die von den geförderten Hölzern herabfallenden Rindenteile, Holzspreißel und dgl. problemlos entfernt werden können.

Diese Eigenschaften werden bei einem erfindungsgemäßen Aufgabeförderer, als einzelnem Baustein einer Aufgabestation - im Folgenden auch als Fördereinheit bezeichnet - dadurch erreicht, daß er statisch in sich tragend konstruiert ist und sowohl der Vorratsförderer als auch der Vereinzelungsförderer auf einem Tragegestell aufgesetzt sind. Alle drei haben entsprechende Passungen zum problemlosen Aufeinandersetzen in der gewünschten Kombination nach dem Baukastensystem.

Jede Fördereinheit ist für sich als vollkommen fertiger Baustein ausgebildet. So läßt sich die Aufgabestation jederzeit verlängern, indem beliebig viele Fördereinheiten aneinandergereiht werden. Die Aufgabestation kann als Links- oder Rechtsausführung gestaltet werden. Die einzelnen fertigmontierten Fördereinheiten werden jeweils a) an den beiden Antriebswellen und b) am oberen Ende des Vorratsförderers miteinander verbunden. Im Fall a) vom Abtrieb der einen zum Antrieb der benachbarten Fördereinheit hin je mit einer Zwischenwelle, im Fall b) wird zwischen die einzelnen fertigen Fördereinheiten ein Zwischenholm eingeschraubt oder notfalls eingeschweißt.

Ein erfindungsgemäßer Aufgabeförderer weist verschiedene Vorteile auf:
Mit ihm als Baustein lassen sich je nach Praxisbedarf sämtliche Größen und Arten von Aufgabestationen zusammenkombinieren sowohl für den Lang- als auch für den Kurzholzbereich und ohne großen Aufwand an einen anderen Einsatzort bringen. Er braucht nur mehr wenige Betonfundamente (große Zeit- und Kostenersparnis, sehr leichte Montage und Demontage). Dieselbe Aufgabestation kann entweder links oder rechts zum Längsförderer gesetzt werden, je nach den jeweiligen betrieblichen Erfordernissen. Der geräumige Bodenraum unter der erfindungsgemäßen Aufgabestation kann maschinell gereinigt werden.

Im Folgenden wird die Erfindung anhand von Beispielen und mit Bezug auf die beiliegenden Zeichnungen näher erläutert:

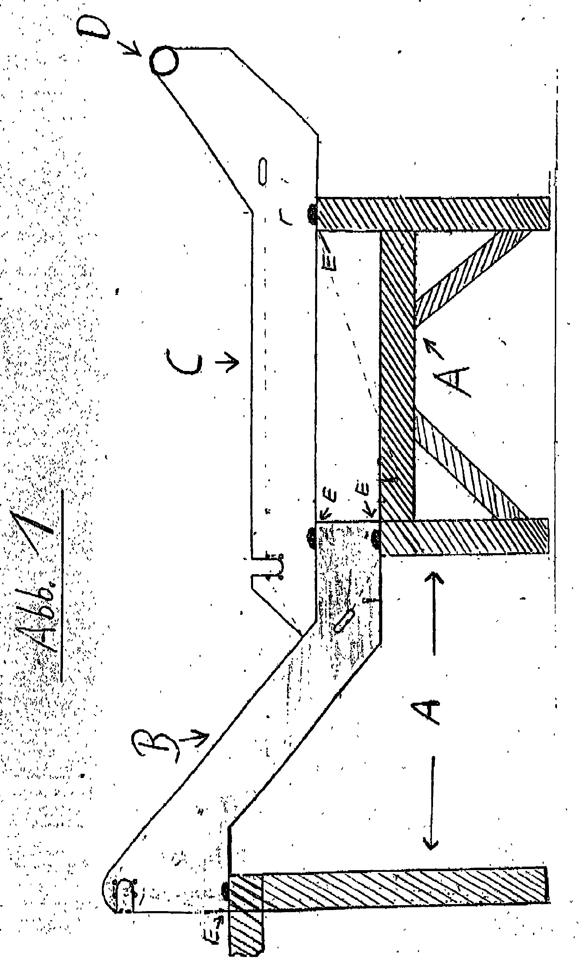

Abbildung 1 zeigt einen einzelnen Aufgabeförderer als Baustein einer Aufgabestation in Seitenansicht mit seinen 3 Hauptbauteilen: A dem Tragegestell für die Bauteile B und C, B der vereinzelungsstufe, C dem vorratsförderer, D dem vollkommen integriert in den Vorratsförderer eingearbeiteten Abladeholm. Bei der Montage oder einer event. Demontage der einzelnen Fördereinheiten entfällt die gesonderte Installation bzw. das Abtrennen des Abladeholms (D). Quer zu den Kettensträngen des Aufgabeförderers verlaufende Abladeholme sind schon seit Jahren erfolgreich im Einsatz, sie sind aber nicht integriert, sondern werden nachträglich angebracht. Der Abladeholm (D) dient auch zur statischen Verfestigung der einzelnen für sich alleine vollkommen fertigen Fördereinheit. Die Passungen (E) bieten die Möglichkeit zu einer Konusbefestigung (L) mit daraufgesetzter Verschraubung und ermöglichen das leichte Ineinanderfügen und Auseinandernehmen von Tragegestell (A), Vorratsförderer (C) und Vereinzelungsstufe (B). Die durchgehende seitliche Rahmenwand (K) verleiht der einzelnen Fördereinheit eine besondere stabilität.

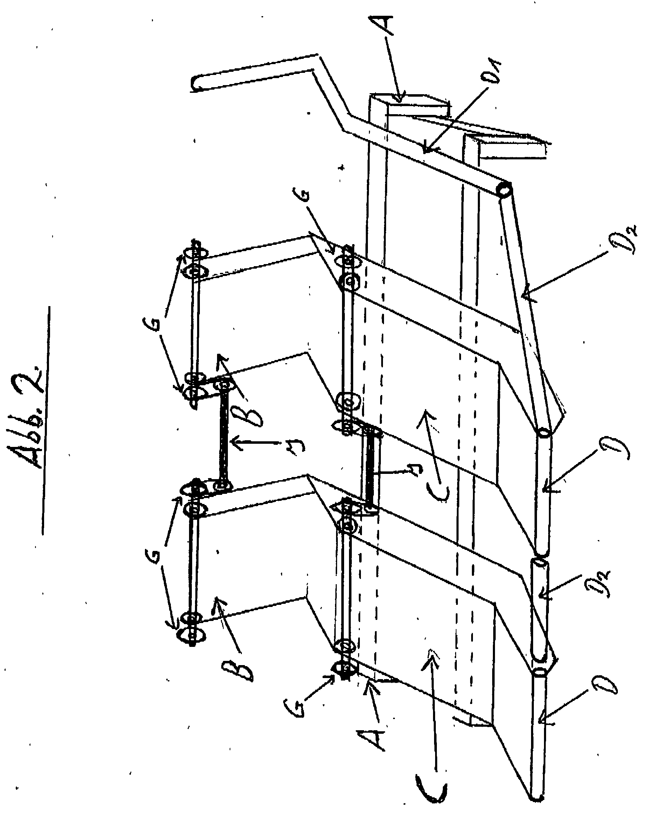

Abbildung 2 zeigt eine Aufgabestation mit zwei montierten Födereinheiten und den integrierten (D) und den verlängerten Abladeholm (D₁). Die zwei Fördereinheiten sind an den beiden Antriebswellen über eine Zwischenwelle (I) verbunden, diese kann versetzt als Antriebswelle für die Fördereinheiten gestaltet sein oder als direkte Welle die einzelnen Fördereinheiten verbinden.
   Ein Abladeholm (D) ist am vorderen Ende jedes Vorratsförderers (C) fest integriert und dient u. a. auch zur statischen Verfestigung der einzelnen Fördereinheiten.
   Der Abladeholm (D) setzt sich zwischen den benachbarten Fördereinheiten als verschraubbarer Zwischenholm (D₂) fort hin bis zum verlängerten ebenfalls verschraubbaren Abladeholm (D₁).
   Der verlängerte Abladeholm (D₁) verläuft parallel zu den Kettensträngen (F) des Vorratsförderers (C) bis zum vorderen Ende der Vereinzelungsstufe (B) oder, wie im Bild, parallel zu den Kettensträngen (F) der vereinzelungsstufe, ansteigend bis zum oberen Ende der Vereinzelungsstufe (B). Der verlängerte Abladeholm (D₁) liegt um ca. 5 - 20 cm tiefer als die Kettenstränge (F).
   Er dient als Ersatz für den letzten Kettenstrang eines herkömmlichen Aufgabeforderers zum Auflegen der Baumstämme während des Abladens von Langholz.
   Der aufzugebende Baumstamm wird mit dem Kran des anliefernden Holztransporters an der dem Rotor zugewandten Seite hochgehalten und mit dem anderen Ende auf dem Abladeholm (D₁) - und nicht auf den Kettensträngen (F)! - vor- und zurückgeschoben, bis er weiterverarbeitungsgerecht auf dem Vorratsförderer (B) positioniert ist. Dadurch gelangt das Gewicht jedes einzelnen Baumstamms während dieser Prozedur nicht auf die Förderketten, sodaß die Kettenstränge (F) der letzten dem Abladeholm (D₁) benachbarten Fördereinheit nicht unnötig belastet und beschädigt werden. Denn erst, wenn der Baumstamm richtig positioniert ist, wird er auf den Kettensträngen (F) abgelegt und dadurch vom etwas tiefer liegenden Abladeholm (D₁) abgehoben. Außerdem kann durch die Anbringung dieses Abladeholms (D₁) eine Fördereinheit eingespart werden.

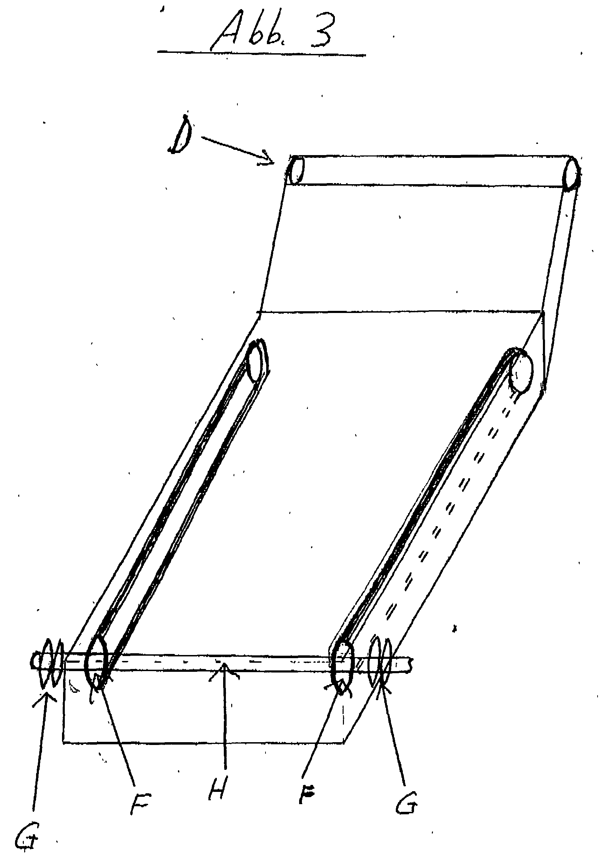

Abbildung 3 zeigt einen fertig montierten Vorratsförderer (C) mit dem integrierten Abladeholm (D) und die beiden unmittelbar neben den Rahmenwänden (K) verlaufenden um einige cm tiefer gelegten Kettenstränge (F), von denen nur die auf die Ketten geschweißten Mitnehmer (N) über die Rahmenwand (K) hinausragen. An den beiden Enden der Hauptwelle (H) befinden sich die obligatorischen An- und Abtriebseinheiten (G).

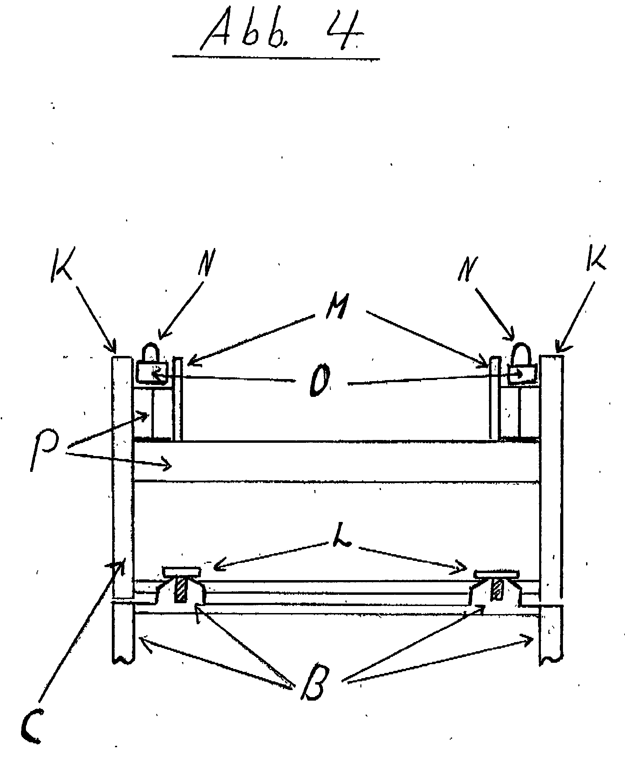

Abbildung 4 zeigt die Frontansicht eines Aufgabeförderers mit den beiden Rahmenplatten (K) und die an deren Innenseiten parallel zu ihnen verlaufenden Kettenstränge (F). Auf einem niveaumäßig zur Rahmenwand (K) um einige cm nach unten versetzt angeschweißten T-Träger (P) liegt die Förderkette (O) auf. Sie ist auf der von der Rahmenwand (K) abgewandten Seite von einer zusätzlichen Kettenführung (M) begrenzt. Der Vorratsförderer (C) ist mit der darunterliegenden Vereinzelungsstufe (B) (s. Abb. 1) über eine Konusbefestigung (L) mit daraufgesetzter Schraube verschraubt. Die aufgegebenen Rundhölzer fallen auf die stabile Rahmenwand (K), die diesem Aufprall dauerhaft standhält. Das Holz liegt während der ganzen Transportstrecke, sowohl auf dem Vorratsförderer (C) als auch auf der Vereinzelungsstufe (B), nur mehr auf den durchgehenden stabilen Rahmenplatten (K) der einzelnen Fördereinheiten auf und wird nur von den an den Förderketten (0) angebrachten Mitnehmern (N) weitergeschoben. Ein Kontakt der Baumstämme mit den Förderketten (O) selbst ist im Prinzip ausgeschlossen und damit auch eine Beschädigung derselben. Bei den marktüblichen Förderern wird das Rundholz unmittelbar auf den Kettensträngen (F) abgelegt mit der Gefahr der Beschädigung. Eine erfindungsgemäße Aufgabestation für Rundholz setzt sich aus einzelnen fertig montierten statisch in sich tragenden Fördereinheiten zusammen, bestehend aus dem Vorratsförderer (C) und der Vereinzelungsstufe (B), die beide auf einem Tragegestell (A) aufgesetzt sind, zwei Kettensträngen (F), je einer Antriebs- und Abtriebseinheit (G) und den Antriebswellen,
Ober die Passungen (E) werden der Vorratsförderer (C), die Vereinzelungsstufe (B) und das Tragegestell (A) mittels einer Konusbefestigung (L) mit daraufgesetzter Verschraubung aufeinandergesetzt.
Diese einzelnen Fördereinheiten können durch ihre Bauart zu Aufgabestationen von beliebiger Länge und wahlweise zu rechts- oder Linksaufgaben aneinandergefügt werden. Als Ersatz für den letzten Kettenstrang verläuft parallel zu den Kettensträngen (F) ein Abladeholm (D₁) zum Auflegen der Baumstämme beim Beschicken des Vorratsförderers (C).

## Patentansprüche

1. Aufgabeförderer mit vorratsförderer (C) und Vereinzelungsstufe (B) auf einem Tragegestell (A) aufgesetzt, **dadurch gekennzeichnet, daß** (A), (B) und (C) immer als ein in sich tragender fertiger Baustein mit zwei oder mehr Kettensträngen (F) und je einer an den beiden Enden der Hauptantriebswelle (H) außerhalb der Rahmenwand (K) befindlichen An- bzw. Abtriebseinheit (G) zusammengebaut sind. Über die Passungen (E) werden der Vorratsförderer (C), die Vereinzelungsstufe (B) und das Tragegestell (A) mittels einer Konusbefestigung (L) mit daraufgesetzter Verschraubung aufeinandergesetzt.

2. Aufgabeförderer nach Anspruch 1, **dadurch gekennzeichnet, daß** die seitlichen Begrenzungen jeder Fördereinheit aus stabilen vom Vorratsförderer (C) bis zum Ende der Vereinzelungsstufe (B) durchgehenden Rahmenplatten (K) bestehen. Unmittelbar anschließend verläuft an den Innenseiten dieser Rahmenplatten (K) auf um ein paar cm niedrigerem Niveau je ein Kettenstrang (F). Zwischen diesen beiden Kettensträngen (F) können noch weitere Kettenstränge angebracht sein. Die Kettenstränge (F) laufen auf einem an die Innenseiten der Rahmenwände (K) angeschweißten T-Träger (P), von einer zusätzlichen Kettenführung (M) auf der von der Rahmenwand (K) abgewandten Seite begrenzt.

3. Aufgabeförderer nach Anspruch 2, **dadurch gekennzeichnet, daß** sowohl der Vorratsförderer (C) Und die Vereinzelungsstufe (B) als auch das Tragegestell mit Passungen (E) ausgestattet sind, die ein In- und Aufeinanderstecken ermöglichen. Dies geschieht über Konusbefestigungen (L) mit daraufgesetzter Verschraubung.

4. Aufgabeförderer nach Anspruch 3, **dadurch gekennzeichnet, daß** diese einzelnen Fördereinheiten durch ihre Bauart problemlos zu Aufgabestationen beliebiger Länge zusammengestellt werden. Die Fördereinheiten als Ganzes und die Rohreinheiten können beliebig vertauscht werden. Auf diese Weise ist es möglich Aufgabestationen für den Lang- und Kurzholzbereich in wahlweise Rechts- oder Linksausführung aus immer den gleichen Bausteinen zusammenzustellen. Auch die Verwendung einer einzelnen Fördereinheit als Aufgabestation ist möglich, wenn es für die jeweiligen betrieblichen Erfordernisse ausreicht.

5. Aufgabeförderer nach Anspruch 4, **dadurch gekennzeichnet, daß** der Abladeholm (D), der quer zu den Kettensträngen (F) der einzelnen Fördereinheit verläuft, fest in den Vorratsförderer (C) integriert ist.

6. Aufgabestation nach den Ansprüchen 1 - 5, **dadurch gekennzeichnet, daß** ein verlängerter Abladeholm (D₁) parallel zu den kettensträngen (F) des Vorratsförderers (C) entweder bis zum vorderen Ende der Vereinzelungsstufe (B) verläuft oder, parallel zu den Kettensträngen (F) der vereinzelungsstufe (B), Ansteigend bis zu deren oberem Ende. Der verlängerte Abladeholm (D₁) ist um ca. 5 - 20 cm tiefer gesetzt als die Kettenstränge (F).
